# EUROPÄISCHE PATENTSCHRIFT

(11) **EP 1 527 807 B1**
(45) Veröffentlichungstag und Bekanntmachung des Hinweises auf die Patenterteilung: **08.10.2008**
(21) Anmeldenummer: 04025154.8
(22) Anmeldetag: 22.10.2004
(51) Int. Cl.: B01D 50/00, B04C 9/00

(54) **Vorrichtung und Verfahren zum Abscheiden von Staubbestandteilen aus einem explosionsfähigen Staub-Luft-Gemisch**
Device and method for separating dust from an explosive dust/air mixture
Dispositif et procédé pour la séparation de poussière d'un mélange poussière/air explosif

(30) Priorität: 28.10.2003 DE 10350395
(43) Veröffentlichungstag der Anmeldung: 04.05.2005
(73) Patentinhaber: Handte Umwelttechnik GmbH, 78532 Tuttlingen (DE)
(72) Erfinder: Handte, Siegfried, Dipl.-Ing., 78351 Bodman-Ludwigshafen (DE)
(74) Vertreter: Müller, Hans

(56) Entgegenhaltungen:
- EP-A- 1 270 060
- DE-U- 29 914 378

## Beschreibung

### TECHNISCHES GEBIET

Die Erfindung betrifft ein Verfahren sowie eine Vorrichtung, mit der sich Staubbestandteile aus einem explosionsfähigen Staub-Luft-Gemisch gefahrlos abscheiden lassen. Solche Staubbestandteile sind beispielsweise Aluminiumstäube und Aluminiumspäne, wie sie auf entsprechenden schleif- und spanabhebenden Bearbeitungsmaschinen anfallen. Bei einer entsprechend hohen Staub-Luft-Konzentration stellen sie ein brennbares beziehungsweise explosives Staub-Luft-Gemisch dar.

Zum Abscheiden derartiger brennbarer beziehungsweise explosiver Stäube können druckfest ausgelegte Trockenabscheider verwendet werden, die mit Entlastungsflächen und Ableitungskanälen derart versehen sind, dass ein entstehender Überdruck gefahrlos ins Freie abgeführt werden kann. Eine andere Möglichkeit zum Abscheiden derartiger Stäube besteht darin, druckfest ausgeführte Trockenabscheider mit einer Explosionsunterdrückung mittels inertem Löschmittel zu versehen.

### STAND DER TECHNIK

Aus der EP 1 270 060 A1 ist eine Vorrichtung zum Abscheiden von Feststoffen aus einem gasförmigen Medium bekannt, bei der durch Zugabe von inerten Stoffen das Entstehen von explosionsfähigen Staub-Luft-Gemischen verhindert wird.

Der als kompaktes Gerät konzipierte Trockenabscheider fällt in die deutsche Explosionsklasse ST 1. Dadurch ist es möglich, den Trockenabscheider druckfest auf etwa 0,1 bar auszulegen und einen eventuell entstehenden Explosionsdruck mittels einer Druckentlastungseinrichtung in den Arbeitsraum hin abzuleiten. Der Trockenabscheider lässt sich damit wegen des nicht erforderlichen Anschlusses an nach außen ins Freie führende Abluftkanäle innerhalb von Arbeitsräumen an beliebigen, auch wechselnden inneren Bereichen des Arbeitsraumes aufstellen.

Mit diesem Trockenabscheider lassen sich auf wirtschaftlich vertretbare Weise Aluminiumspäne aus der Abluft absondern. Diese Aluminiumspäne können einer Wiederverwertung zugeführt werden. Dies ist von erheblicher Bedeutung, da Aluminium bearbeitende Maschinen aus Kosteneinsparungsgründen verstärkt trocken oder beispielsweise mit einer Minimalmengenschmierung arbeiten.

Bei dem Trockenabscheider sind zwei Sichtungsvorgänge zum Separieren der groben Späne aus der zu reinigenden Abluft vorgesehen. Eine erste Sichtung erfolgt mittels eines Zyklons. Innerhalb des Zyklons werden die gröberen und damit schwereren Teilchen in der Rohluft nach außen geschleudert und durch eine in der Außenwandung des Zyklons vorhandene Öffnung ausgeschieden. Die mit feineren Staubanteilen beladene Restluft wird im Inneren des Zyklons zentral einer nachfolgenden Feinfilterung zugeführt, wobei diese Luft vorher mit Additiv-Partikeln vermischt wird.

Die aus dem Zyklon abgesonderten groben Späneteilchen werden noch einmal gesichtet. Dies erfolgt in einem Windsichter. Innerhalb dieses Windsichters können mit Hilfe ihres unterschiedlichen Gewichtes Späneteilchen durch Schwerkraft ausgesondert werden. Bei Aluminiumstäuben können beispielsweise Späne mit einem Durchmesser größer 0,5 mm wirtschaftlich weiterverwertet werden. Späne mit einer solchen Größe werden also durch die zweite Sichtung endgültig aus dem Trockenabscheider ausgesondert.

Das restliche Staub- und kleine Späne-Luft-Gemisch wird durch die Vermischung mit inerten Additiv-Partikeln für eine weitere Verwendung unbrauchbar. Dieses Gemisch wird über einen Feinfilter geleitet und kann als Reinluft wieder in den Arbeitsraum zurückgeleitet werden. Das Staub-Additiv-Gemisch setzt sich an der Filteroberfläche ab und fällt beim Abrütteln der Filter in einen entsprechend platzierten Staubbehälter hinein.

Dieser Staubbehälter, in dem die bei dem Abreinigungsvorgang abgereinigten Prozessstäube gesammelt werden, besitzt Füllstandsmesser einerseits zum Feststellen der in dem Staubbehälter am Anfang seiner Verwertung vorhandenen Menge an Additiv-Partikeln und andererseits zum Feststellen eines maximal zulässigen Füllstandes der mit abgereinigtem Prozessstaub und Additiv-Partikeln vermischten Partikelmenge. Bei Erreichen des maximalen Füllstandes im Staubbehälter muss derselbe durch einen neuen Staubbehälter ausgetauscht werden.

Es hat sich herausgestellt, dass eine solche Explosionsschutzmaßnahme zum Vermeiden einer explosionsfähigen Atmosphäre einerseits im Filtergehäuse und andererseits im Staubbehälter für die meisten der regelmäßig in den Betrieben auftretenden Betriebszustände als ausreichend angesehen werden kann.

### DARSTELLUNG DER ERFINDUNG

Ausgehend von diesem Stand der Technik liegt der Erfindung die Aufgabe zugrunde, eine möglichst optimale Möglichkeit zum Abscheiden von Staubbestandteilen aus einem explosionsfähigen Staub-Luft-Gemisch anzugeben.

Diese Erfindung ist für ein erfindungsgemäßes Verfahren zum Abscheiden solcher Staubbestandteile durch die Merkmale des Anspruchs 1 gegeben. Eine erfindungsgemäße Vorrichtung zum Durchführen eines solchen Verfahrens ist durch die Merkmale des Anspruchs 23 angegeben. Sinnvolle Weiterbildungen sowohl des erfindungsgemäßen Verfahrens als auch der erfindungsgemäßen Vorrichtung sind Gegenstand von sich an den Anspruch 1 beziehungsweise Anspruch 23 jeweils anschließenden weiteren Ansprüchen.

Die Erfindung geht von der Erkenntnis aus, dass es zur Sicherstellung eines nicht explosionsfähigen Staub-Luft-Gemisches ganz maßgeblich darauf ankommt, wieviel Gewichtsprozente Staub in dem jeweiligen Staub-Luft-Gemisch vorhanden sind, und dass daher primär auf die Gewichtsanteile der jeweils beim Abreinigen entstehenden Staub-Luft-Gemische zurückgegriffen werden sollte. Statt der Überwachung des Staub-Luft-Gemisches im Staubbehälter ausschließlich mittels Füllstandssonden werden daher erfindungsgemäß als Basis für ein Explosionsschutzkonzept nicht die jeweiligen Füllstandshöhen, sondern die jeweiligen Gewichte des Staubbehälters und damit das jeweilige Gewicht der im Staubbehälter vorhandenen Partikel zugrunde gelegt.

Bei dem erfindungsgemäßen Verfahren wird das Gewicht des Staubbehälters gewogen, nachdem bei der erstmaligen Nutzung eines Additiv-Partikel enthaltenden Behälters die Filterflächen des Feinfilters mit einer ausreichenden Menge an Additiv-Partikeln "beladen" worden sind, und das dann beim Abreinigungsprozess durch in den Behälter hineinfallende Stäube jeweils anwachsende Behältergewicht festgestellt. Bei Erreichen oder Überschreiten eines im Laufe des Abreinigungsvorganges eintretenden erhöhten Gewichtes des Staubbehälters oder wenn eine vorgegebene Standzeit des Staubbehälters verflossen ist, können dann geeignete Maßnahmen vorgesehen werden, um den weiteren Abscheidevorgang gefahrlos beenden zu können.

Das erfindungsgemäße Abreinigen eignet sich insbesondere zum Abreinigen von Aluminiumstäuben und Aluminiumspänen. Die dabei verwendeten Additiv-Partikel können aus Siliciumdioxid und Calciumcarbonat (Kalk) bestehen. Der Kalk setzt sich dabei insbesondere aus Kalksteinmehl und Trassmehl, im Verhältnis von 85 Gewichtsprozent zu 15 Gewichtsprozent, zusammen.

Um ein ausreichendes Beladen der Filterflächen mit Additiv-Partikeln sicherzustellen - einerseits beim Starten eines Abreinigungsvorganges mit Hilfe eines erstmals verwendeten oder ausgetauschten Staubbehälters, andererseits nach jedem Abreinigungsvorgang, und damit zum Sicherstellen eines nicht explosionsfähigen Staub-Luft-Gemisches im Bereich der Filterflächen, kann es hilfreich sein, das Gewicht des Staubbehälters vor seinem erstmaligen Einsatz festzustellen und das Beladen dann solange durch entsprechendes Einleiten von Druckluft in den Staubbehälter hinein ablaufen zu lassen, bis sich für den Staubbehälter durch das Herausblasen einer entsprechenden Menge an Additiv-Partikeln ein dementsprechend niedrigeres Gewicht eingestellt hat.

Die ermittelte Gewichtsdifferenz entspricht dann dem Gewicht der aus dem Staubbehälter herausgeblasenen und in den Filter hineingeblasenen Additiv-Partikel. Alternativ oder zusätzlich ist es auch möglich, eine vorbestimmt lange Zeit Additiv-Partikel aus dem Staubbehälter herauszublasen. Aufgrund von vorhergehenden Versuchen lässt sich feststellen, in welcher Zeitspanne eine wie große Partikelmenge aus dem Behälter herausgeblasen wird. Auch über die Zeitdauer lässt sich dann das Gewicht der herausgeblasenen Additiv-Partikel ermitteln.

Um sicher zu gehen, dass das Gewicht des Behälters auch richtig ermittelt wird, hat es sich als sinnvoll herausgestellt, die Wägeergebnisse bezüglich des jeweiligen Gewichtes des Staubbehälters auf ihre jeweilige Richtigkeit zu überprüfen. Dieses Überprüfen kann dadurch erfolgen, dass der Staubbehälter gleichzeitig mittels mehrerer Wägeeinrichtungen gewogen wird, so dass sich das Gewicht des Staubbehälters aus den Teilgewichten der Wägeeinrichtungen ermitteln lässt. Unter der realistischen Annahme, dass sich der Behälter querschnittsmäßig gleichmäßig mit Prozessstaub füllt und gleichmäßig aus ihm Additiv-Partikel herausgeblasen werden, stehen die jeweiligen Teilgewichte der vorhandenen Wägeeinrichtungen jeweils in einem bestimmten Verhältnis zueinander. Weichen nun die jeweiligen Ist-Verhältnisse der Teilgewichte von den jeweiligen Soll-Verhältnissen um mehr als einen vorgegebenen Toleranzwert ab, kann eine Störmeldung abgegeben werden mit der Folge, dass Maßnahmen ergriffen werden, um den weiteren Betrieb der Abscheidevorrichtung gefahrlos beenden zu können.

Um das Beladen der Filterflächen für die Filterflächen immer in gleicher Weise durchführen zu können, ist es sinnvoll, vor dem Beladen der Filterflächen dieselben erst abzureinigen und dann erst mit Additiv-Partikeln zu beladen. Auf diese Weise kann von einer immer gleich großen Menge an Additiv-Partikeln an den Filterflächen ausgegangen werden.

Während des Einsatzes eines Staubbehälters werden die Filterflächen regelmäßig mehrmals, insbesondere etwa dreimal pro Betriebsstunde, abgereinigt. Nach jedem Abreinigen werden aus dem Staubbehälter heraus Additiv-Partikel an den Filterflächen angelagert. Dieser Inertisierungsvorgang, d. h. das Beladen der Filterflächen mit Additiv-Partikeln, findet also abwechselnd mit dem Abreinigen der Filterflächen statt.

Es hat sich herausgestellt, dass es gefahrlos möglich ist, während des Austauschens eines verbrauchten Staubbehälters gegen einen neuen Staubbehälter, die das explosionsfähige Staub-Luft-Gemisch liefernde Maschinenanlage weiter zu betreiben und deren Betrieb nicht zu unterbrechen. Allerdings muss der Austauschvorgang innerhalb einer bestimmten Zeitspanne erfolgen. Wird diese Zeitspanne überschritten, kann ebenfalls wieder eine Störmeldung vorgesehen werden mit der Folge, dass Maßnahmen eingeleitet werden, um den Weiterbetrieb der Anlage zu unterbrechen.

Unter Sicherheitsgesichtspunkten ist es sinnvoll, den Betriebsdruck der in den Staubbehälter hineingeleiteten Druckluft zu überwachen. Ebenso ist es sinnvoll, die Lüfterleistung des Ventilators, der zum Ableiten der das Filtergehäuse verlassenden Reinluft in die Abluftleitung eingebaut ist und der vorzugsweise auch zum Durchleiten des Staub-Luft-Gemisches durch das Filtergehäuse hindurch verwendet werden kann, zu überwachen und beim Unterschreiten eines vorgegebenen Grenzwertes eine Störmeldung abzugeben.

Um Ablagerungen von Staubpartikeln in dem Filtergehäuse und in den vor- und nachgeschalteten Gehäuseteilen und Rohrleitungen zu verhindern, kann vorgesehen werden, den Abluft-Ventilator beim Unterbrechen des Zuströmens des Staub-Luft-Gemisches in das Filtergehäuse hinein noch eine Zeit lang weiter zu betreiben. Auch die Durchlässigkeit der Filterflächen und damit die Funktion des Filters lässt sich überprüfen, indem beispielsweise der Druck an der Rohgasseite und an der Reingasseite der Filterflächen festgestellt wird. Beim Überschreiten von vorbestimmten Druck-Grenzwerten kann wiederum eine Störmeldung erfolgen, mit den vorstehend bereits geschilderten Folgemaßnahmen.

Sofern das zu reinigende Staub-Luft-Gemisch nur feine Staubpartikel enthält, können diese unmittelbar in das Filtergehäuse eingeleitet werden. Bei Belastung des Staub-Luft-Gemisches auch mit Spänen ist es sinnvoll, aus dem Staub-Luft-Gemisch zuerst dessen Späne in geeigneten Vorabscheidern abzuscheiden und erst anschließend das restliche Staub-Luft-Gemisch in den Filterbehälter hineinzuleiten.

Weitere Merkmale der Erfindung insbesondere auch zu der das erfindungsgemäße Verfahren nutzenden erfindungsgemäßen Vorrichtung sind den in den Ansprüchen ferner aufgeführten Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: ein Ablaufschema für das Abscheiden von Staubbestandteilen aus einem explosionsfähigen Staub-Luft-Gemisch, unter Verwendung einer ein Filtergehäuse mit mehreren Filterplatten aufweisenden Abscheide-Vorrichtung, eines unter dem Filtergehäuse austauschbar anzuordnenden und mit inerten Additiv-Partikeln gefüllten Staubbehälters, und eines dem Filtergehäuse eingangsseitig vorgeschalteten Vorabscheiders mit einem Zyklon-Vorabscheider, mit einem Windsichter und mit einer Zellenradschleuse,
- Fig. 2: eine Teilansicht mit dem Vorabscheider der Abscheide-Vorrichtung gemäß Fig. 1,
- Fig. 3: eine Teilansicht mit dem Staubbehälter der Abscheide-Vorrichtung gemäß Fig. 1.

### WEGE ZUM AUSFÜHREN DER ERFINDUNG

Eine Abscheidevorrichtung 10 ist an einer in der Zeichnung nicht dargestellten Bearbeitungsmaschine angeschlossen. Auf dieser Bearbeitungsmaschine wird Aluminium mittels schleif- und spanabhebender Fertigungsprozesse trocken oder mit lediglich einer Minimalmengenschmierung bearbeitet.

Durch die Abscheidevorrichtung 10 werden diese Aluminiumstäube und Aluminiumspäne, die mit Öl- und Emulsions-Aerosole beladen sein können, aus der die Bearbeitungsmaschine verlassenden und der Abscheidevorrichtung 10 zugeführten Rohluft 12 abgeschieden.

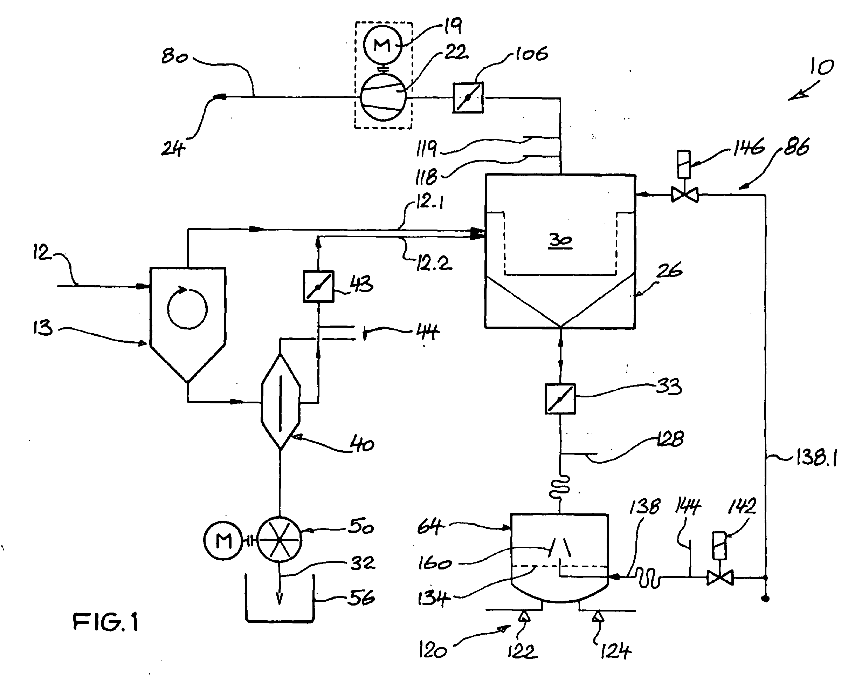

Die als Staub-Luft-Gemisch vorhandene Rohluft 12, deren Staubbestandteile im vorliegenden Beispielsfall gemäß Fig. 1 auch Späne enthalten, wird zuerst durch einen Vorabscheider 13 geleitet, durch den die Spänebestandteile aus der Rohluft 12 abgeschieden werden. Erst die von Spänen weitestgehend befreite Rohluft 12 wird dann durch Filterplatten 30, die in einem Filtergehäuse 26 vorhanden sind, hindurchgeleitet. Die das Filtergehäuse 26 anschließend verlassende Luft wird als Reinluft 24 entweder ins Freie entlassen oder als Umluft wieder zur Bearbeitungsmaschine zurückgeführt. Die im Inneren des Filtergehäuses 26 anfallenden, aus der Rohluft abgeschiedenen Stäube werden in einem Staubbehälter 64 aufgefangen, wie noch nachstehend näher beschrieben wird.

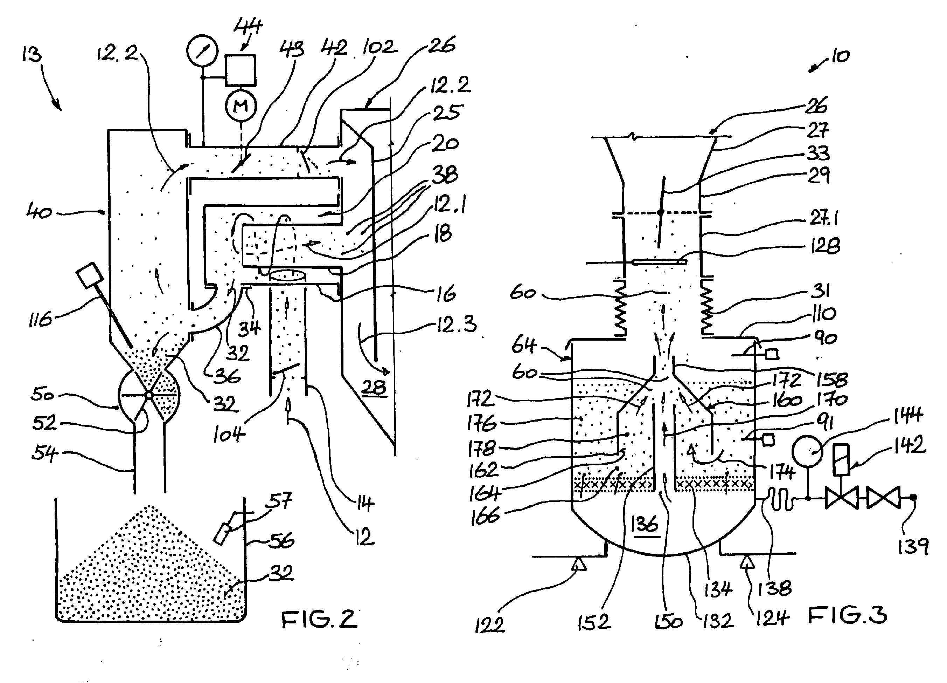

Der Vorabscheider 13 (Fig. 2) besitzt ein Ansaugrohr 14, durch das hindurch die Rohluft 12 in den Vorabscheider 13 hineingesaugt wird. Das Ansaugrohr 14 mündet tangential in ein äußeres Rohr 16 ein, das zusammen mit einem inneren Rohr 18 (Tauchrohr) einen Vorabscheider in Form eines Zyklons 20 darstellt. Die Rohluft 12 wird dabei durch einen endseitig an der Abscheidevorrichtung 10, in der Abluftleitung 80 installierten, und mittels eines motorischen Antriebes 19 betriebenen Ventilators 22, der im vorliegenden Beispielsfall ein Radialventilator ist, durch die Abscheidevorrichtung 10 hindurchgesaugt.

Ein derartiger Zyklon 20 ist prinzipiell aus DE 299 22 658 U1 bekannt. Bei dem Zyklon 20 wird die mit Spänen und Staubpartikeln beladene Rohluft 12 tangential in das äußere Rohr 16 des Vorabscheiders 13 hineingeleitet. Die Rohluft 12 rotiert in dem äußeren Rohr 16 herum und strömt dann durch das innere Rohr 18 hindurch in den Innenraum 28 des Filtergehäuses 26 hinein. In dem Innenraum 28 sind mehrere Filterplatten 30 nach bekannter Bauart parallel nebeneinander liegend angeordnet, die von außen nach innen durchströmt werden. Eingangsseitig ist im Filtergehäuse 26 ein Schutzblech 25 angeordnet, das die Filterplatten schützt und für ein optimales Anströmen der Filterplatten sorgt.

In dem Zyklon 20 werden die schweren Bestandteile der Rohluft 12, wie beispielsweise die schwereren Späne 32, radial in dem äußeren Rohr 16 nach außen geschleudert und treten durch ein tangential am äußeren Rohr 16 angeschlossenen Stutzen 34 in eine Verbindungsleitung 36 hinein. Die leichteren Bestandteile der Rohluft 12, wie die beispielsweise leichteren Späne und Staubpartikel 38, werden durch das innere Rohr 18 in den Innenraum 28 des Filtergehäuses 26 hineingesaugt.

Die Verbindungsleitung 36 führt in den unteren Bereich eines Windsichters 40. Der Windsichter 40 wird von der durch die Verbindungsleitung 36 strömenden, mit insbesondere schwereren Spänen 32 beladenen Luft von unten nach oben durchströmt. Diese Luft 12.2 strömt von oben aus dem Windsichter 40 in eine Zuleitung 42, die ebenfalls in den Innenraum 28 des Filtergehäuses 26 einmündet.

In der Zuleitung 42 ist eine Drosselklappe 43 als Teil einer Unterdruckregelung 44 vorhanden, mit der der Unterdruck in der Zuleitung 42 und damit in dem Windsichter 40 so geregelt werden kann, dass die schwereren Bestandteile der durch den Windsichter 40 hindurchgeleiteten Rohluft 12.2 in dem Windsichter 40 nach unten fallen und nur entsprechend leichtere Verunreinigungen der Rohluft 12.2 nach oben durch den Windsichter 40 hindurchgeführt und durch die Zuleitung 42 hindurch in den Innenraum 28 des Filtergehäuses 26 eingeleitet werden.

In dem Windsichter 40 werden also die schwereren Verunreinigungen von den leichteren Verunreinigungen, d. h. größere Verunreinigungen, wie beispielsweise Späne, von kleineren Verunreinigungen, wie beispielsweise Stäube und kleinere Späne, getrennt. Es hängt von der Größe des Unterdruckes und damit von der Stellung auch der Drosselklappe 43 in der Zuleitung 42 ab, bis zu welcher Korngröße beziehungsweise Partikelgröße beispielsweise Aluminiumspäne nach oben durch den Windsichter 40 hindurchgeleitet werden. Die nicht strömungsmäßig mitgenommenen größeren beziehungsweise gröberen Späne 32 sinken nach unten im Windsichter ab und können über eine im Windsichter angeordnete Zellenradschleuse 50, die im vorliegenden Fall mit einem Zellenrad 52 ausgestattet ist, in ein Austragsrohr 54 überführt und dann anschließend in einem Spänebehälter 56 eingesammelt werden. Ein in der Zellenradschleuse 50 vorhandener Drehzahlwächter für das Zellenrad 52 überwacht die Funktion der Zellenradschleuse 50.

In dem Spänebehälter 56 ist eine Füllstandssonde 57 vorhanden, mit der der Füllstand an Spänen 32 im Spänebehälter 56 überwacht wird, damit nicht zuviel Späne 32 in den Spänebehälter 56 eingefüllt werden.

In der Zuleitung 42 ist zwischen der Drosselklappe 43 und dem Filtergehäuse 26 eine Rückschlagklappe 102 eingebaut, die verhindert, dass bei im Innenraum 28 des Filtergehäuses 26 eventuell auftretenden Verpuffungen sich die dadurch entstehenden Druckwellen rückwärts in den Vorabscheider 13 hinein ausbreiten können. Weitere derartige Rückschlagklappen 104, 106 sind in dem Ansaugrohr 14 beziehungsweise in der Abluftleitung 80 vorhanden. Die Rückschlagklappen 102, 104,106 verschließen die entsprechenden Leitungen 42,14,18 in jeweils vom Filtergehäuse 26 wegführender Strömungsrichtung, d. h. rückwärts in den Vorabscheider 13 und in das Ansaugrohr 14 hinein, sowie vorwärts in die Abluftleitung 80 hinein.

In den Innenraum 28 strömt einerseits durch das innere Rohr 18 hindurch mit Stäuben beladene Luft 12.1. Ferner strömt durch die Zuleitung 42 hindurch Rohluft 12.2, die außer mit Stäuben noch mit leichteren Spänen 38 beladen sein kann. Im Innenraum 28 vermischen sich diese beiden Rohluftströme 12.1 und 12.2 zu einem Gas-Luft-Gemisch, das als Rohluft 12.3 bezeichnet wird.

Diese Rohluft 12.3 wird mit Additiv-Partikeln 60 vermischt, die aus dem unterhalb des Filtergehäuses 26 positionierten Staubbehälter 64 heraus in den Innenraum 28 und gegen die Filterplatten 30 geblasen werden. Das Beladen der Filterplatten 30 mit solchen Additiv-Partikeln 60 wird als Inertisierung der Filterplatten 30 bezeichnet.

Durch diese Inertisierung wird die Rohluft 12.3 inexplosiv. Der bei dieser Vermischung der Rohluft 12.3 mit Additiv-Partikeln 60 an den Filterplatten 30 sich bildende und durch Abreinigung der Filterplatten 30 von denselben nach unten in den Staubbehälter 64 abfallende Prozessstaub ist nicht explosiv.

Das Filtergehäuse 26 besitzt einen sich nach unten konisch verjüngenden Trichter 27 als Boden. Der untere, relativ kleine Öffnungsrand 29 des Trichters 27 ist über ein Leitungsstück 27.1 mit einer elastischen Dichtungsmanschette 31 verbunden, die gasdicht an dem Staubbehälter 64 angeschlossen ist.

Im Bereich des unteren Öffnungsrandes 29 des Trichters 27 ist ein Absperrschieber 33 eingebaut. In seinem geschlossenen Zustand verschließt dieser Absperrschieber 33 den Trichter 27 und damit den Boden des Filtergehäuses 26, so dass dann der Staubbehälter 64 von dem Filtergehäuse 26 gelöst, weggebracht und durch einen neuen Staubbehälter ersetzt werden kann. Die Verbindung des Filtergehäuses 26 mit dem Staubbehälter 64 kann beliebig ausgebildet werden. Es ist dabei sicherzustellen, dass die Staubbehälter 64 jeweils ausgetauscht werden können und dass der jeweils an das Filtergehäuse 26 angeschlossene Staubbehälter 64 staubund gasdicht angeschlossen ist.

Der Staubbehälter 64 ist sowohl Vorratsbehälter für die Additiv-Partikel 60 als auch Aufnahmebehälter für den nicht mehr explosiven, von den Filterplatten 30 abgerüttelten Prozessstaub.

Der Staubbehälter 64 ist durch einen Deckel 110, der gasdicht an der elastischen Dichtungsmanschette 31 angeschlossen ist, verschlossen.

In einem Abstand oberhalb des Bodens 132 des Staubbehälters 64 ist ein Sinterboden 134 als Zwischenboden ausgebildet. In den zwischen dem Boden 132 und dem Sinterboden 134 ausgebildeten Zwischenraum 136 mündet eine Druckluftleitung 138, die an eine Druckluftquelle 139 angeschlossen ist. In der Druckluftleitung 138 lässt sich die Menge und Stärke der Druckluft über ein elektrisch angesteuertes Magnetventil 142 regeln. Mittels einer zwischen dem Magnetventil 142 und dem Staubbehälter 64 in der Druckluftleitung 138 angeordneten Druckluft-überwachungseinrichtung 144, die mit Grenzkontakten arbeitet, lässt sich der jeweils gewünschte Druckluftstrom in den Zwischenraum 136 hinein überwachen. Sollte der jeweilige IST-Druckluftstrom von dem gewünschten SOLL-Druckluftstrom abweichen, läuft die Abscheidevorrichtung auf Störung.

Im mittleren Bereich des Sinterbodens 134 ist ein Durchbruch 150 vorhanden, der durch ein endseitig jeweils offenes Rohrstück 152 ausgefüllt ist. In dem Rohrstück 152 können Schieberanordnungen eingebaut sein, um den Öffnungsquerschnitt des Rohres veränderlich einstellen zu können.

Oberhalb des Sinterbodens 134 sind in dem Behälter 64 Additiv-Partikel 60 vorhanden. Im vorliegenden Fall bestehen diese Partikel aus Calciumcarbonat (CaCo₃) und aus Siliciumdioxid (SiO₂).

In dem Behälter 64 ist ein mit seiner kleineren Öffnung 158 nach oben ausgerichteter Trichter 160 vorhanden. Zwischen dem unteren Rand 162 des Trichters 160, der dessen größere Öffnung 164 einrahmt, und dem Sinterboden 134 ist ein Ringspalt 166 ausgebildet.

Im Betrieb der Abscheidevorrichtung 10 strömt in den Zwischenraum 136 eingeströmte Druckluft verstärkt durch das Rohrstück 152 nach oben hindurch. Außerhalb des Rohrstückes 152 ist die Durchlässigkeit des Sinterbodens 134 kleiner als sie im Öffnungsquerschnitt des Rohrstückes 152 vorhanden ist. Dadurch findet in dem Trichter 160 eine verstärkte Luftströmung entsprechend dem Pfeil 170 statt. Diese Luftströmung ist stärker als die Luftströmung entsprechend den Pfeilen 172 im Ringbereich zwischen der Außenwand des Staubbehälters 64 und dem Rohrstück 152. Dadurch findet eine Luftströmung von dem außerhalb des Trichters 160 vorhandenen Ringraum 176 durch den Ringspalt 166 in den Trichter-Innenraum 178 (Pfeil 174) statt. Die durch den Sinterboden hinduchströmende Druckluft bewirkt ein Fluidisieren der oberhalb des Sinterbodens vorhandenen Partikelströme derart durch den Bereich des Sinterbodens 134 hindurch, dass im Bereich des Trichters 160 eine Luftströmung entsprechend der Pfeile 170, 174 entsteht. Durch den Pfeil 170 werden relativ unbelastete Additiv-Partikel nach oben gegen die Filterplatten 30 des Filtergehäuses 26 geleitet. Dort trifft die zu reinigende Rohluft 12.3, die aus den Rohluft-Bestandteilen 12.1 und 12.2 besteht, mit diesen fluidisierten Partikeln zusammen. Beim Abreinigen der Filterplatten fallen die aus diesen Rohluft- und Additiv-Partikel-Bestandteilen als Prozessstäube bezeichneten Schmutzpartikel nach unten in den Staubbehälter 64 hinein. Aufgrund der relativ kleinen Öffnung 158 des Trichters 160 fallen diese Schmutzpartikel weitestgehend in den Ringraum 176 des Behälters 64. Während einer langen Betriebsdauer ist der durch den Pfeil 170 definierte Partikelstrom anfänglich mehr und im Laufe der Betriebsdauer weniger frei von verunreinigten Teilchen, wie sie im Gegensatz dazu im Ringraum 176 verstärkt vorhanden sind.

Die kleine Trichteröffnung 158 bewirkt nicht nur, dass die beim Abreinigen entstehenden Schmutzpartikel nicht unmittelbar in den Trichter zurückfallen, sondern bildet für die nach oben strömenden Teilchen auch eine Art Düse, so dass die Geschwindigkeit der Gasströme der durch den Pfeil 170 definierten Gasströmung in günstiger Weise erhöht wird. Dadurch werden die Additiv-Partikel weit nach oben in den Innenraum 28 des Filtergehäuses 26 hochgerissen. Es kann dadurch eine optimale Beladung der Filterplatten 30 mit den Additiv-Partikeln 60 stattfinden.

Im oberen Bereich des Behälters 64 ist eine Füllstandssonde 90 eingebaut. Über diese Füllstandssonde 90 wird der maximale Füllstand der in dem Behälter 64 vorhandenen Partikel angezeigt. Über die Füllstandssonde kann der Beladevorgang unterbrochen werden.

Bei Beginn des Abscheidevorganges ist in dem Behälter 64 ein extrem niedriger Füllstand an Partikeln vorhanden. Dieser minimale Füllstand wird durch die allein in dem Behälter 64 vorhandenen Additiv-Partikel vorgegeben und wird durch einen Füllstandsmelder 91 überwacht. Während des Beladevorganges kommen zu diesen Additiv-Partikeln zusätzliche Schmutzpartikel hinzu, die aus dem Prozessstaub bestehen.

Dieser Prozessstaub enthält die aus der Rohluft ausgeschiedenen Aluminium-Stäube und Aluminiumspäne. Dadurch steigt der Füllstand innerhalb des Behälters 64 an, bis er seinen durch die Füllstandssonde 90 definierten oberen Stand erreicht hat. Dieser obere Füllstand stellt ein entsprechendes Grenz-Mischungsverhältnis dar, bei dem ein maximal zulässiger Aluminium-Staubgehalt im Staubbehälter 64 erreicht ist. Bei Erreichen dieses Grenzverhältnisses muss der Behälter 64 gegen einen, unverbrauchte Additiv-Partikel 60 enthaltenden, neuen Staubbehälter ausgetauscht werden. Aus Versuchen wurde festgestellt, dass zur Sicherstellung eines nicht explosionsfähigen Aluminium-Luft-Gemisches der Anteil an Aluminiumstaub kleiner 16 Gewichtsprozent sein muss. Um einen ausreichenden Sicherheitsabstand einzuhalten, wird der maximale Gewichtsanteil an Aluminiumstaub in der Mischung auf 10 Gewichtsprozent festgelegt. Bei Erreichen dieses Grenzwertes geht die Anlage in Störung und ein Automatikabschaltvorgang der Anlage wird eingeleitet.

Der Staubbehälter 64 lässt sich also so lange benutzen und damit der Beladevorgang durchführen, bis eine gewisse Sättigung in der Wirkung der Additiv-Partikel eingetreten ist.

Vor Inbetriebnahme eines jeweiligen Behälters 64 wird derselbe bis zu einer vorgegebenen Marke mit Additiv-Partikeln gefüllt. Diese Menge wird so gewählt, dass das Gemisch, bestehend aus Additiv-Partikeln und eingetragenem Aluminium-Staub, bei Erreichen des oberen Füllstandsmelders 90 noch immer ein nicht brennbares Gemisch darstellt.

Im vorliegenden Beispielsfall stellt eine Gewichts-überwachung des Staubbehälters 64 mit die wichtigste Kontrolleinrichtung dar, um die betriebssichere Arbeitsweise der Abreinigungsvorrichtung 10 sicher zu stellen.

Diese Gewichtsüberwachung erfolgt über eine Wägeeinrichtung 120, die zwei Wägeeinrichtungen 122,124 besitzt. Die Wägeergebnisse durch die beiden Wägeeinrichtungen 122, 124 werden auf ihre Plausibilität hin überprüft. Das jeweilige Gewicht des Staubbehälter 64 ergibt sich aus der Addition der Teilgewichte der beiden einzelnen Wägevorrichtungen 122,124. Sollten sich unplanmäßige Abweichungen des Verhältnisses dieser beiden Teilgewichte zueinander um mehr als einen vorgegebenen Toleranzwert ergeben, erfolgt eine Störmeldung. Bei dieser Gewichtsmessung wird berücksichtigt, dass durch den Unterdruck in dem Filtergehäuse 26 der staubdicht an dem Gehäuse 26 befestigte Staubbehälter 64 leicht angehoben wird, was zu einer scheinbaren Gewichtsreduzierung führt. Diese scheinbare Gewichtsreduzierung des Behälters 64 wird durch eine Druckkompensationsmessung berücksichtigt.

In dem zwischen dem Staubbehälter 64 und dem Filtergehäuse 26 vorhandenen Leitungsstück 27.1 ist eine Sonde 128 platziert, mit der die elektrische Ladung des aus dem Behälter 64 nach oben ausgeblasenen Additiv-Staubgemisches gemessen wird. Die elektrische Ladung dieses Additiv-Staubgemisches steht im direkten Zusammenhang mit der Konsistenz des eingedüsten Gemisches. Durch die Sonde 128 kann daher das Beladen der Filterplatten 30 mit den im Staubbehälter 64 vorhandenen Additiv-Partikeln überwacht werden.

In der Zeichnung nicht dargestellt sind Differenz-Drucküberwachungseinrichtungen für die Filterplatten 30.

In der Abluftleitung 80 sind ein Wärmemelder 118 und eine Luftstromüberwachung 119 eingebaut. Während mit dem Wärmemelder 118 ein unerwünschtes Ansteigen der Temperatur der durch die Abscheidevorrichtung 10 hindurchströmenden Rohluft 12 und Reinluft 24 frühzeitig registriert werden kann, wird mittels der Luftstromüberwachung 119 die Leistung und der Zustand des Ventilators 22 überprüft. Mittels des in der Abluftleitung 80 eingebauten Ventilators 22 wird die Rohluft 12 durch die gesamte Abscheidevorrichtung 10 hindurchgesaugt und als Reinluft 24 ausgeblasen.

Beim Austauschen eines Staubbehälters 64 gegen einen neuen Staubbehälter wird das Filtergehäuse 26 durch das Absperrorgan 33 verschlossen. Da das Austauschen des Staubbehälters 64 nur eine relativ kurze Zeit, wie maximal 15 Minuten dauern darf, kann während dieser Zeit der Betrieb der Abscheidevorrichtung und damit der Ventilator 22 voll in Betrieb bleiben. Wird diese für den Austausch eines Staubbehälters 64 vorgegebene Zeitspanne überschritten, läuft die Anlage auf Störung.

Zur Aufrechterhaltung der Betriebssicherheit der Abscheidevorrichtung 10 ist in dem Windsichter 40 eine Füllstandssonde 116 vorhanden, mit der die sich im Bodenbereich des Windsichters 40 ansammelnde Menge an groben Spänen 32 überwacht wird. In Abhängigkeit von der Füllstandssonde 116 wird die Zellenradschleuse 50 angesteuert. Die Funktion der Zellenradschleuse 50 und damit die Funktion ihres Zentralrades 52 wird über einen in der Zeichnung nicht näher dargestellten Drehzahlwächter überwacht.

Die Filterplatten 30 werden über eine in Fig. 1 schematisiert dargestellte Abreinigungseinrichtung 86 in bestimmten Zeitintervallen nacheinander abgereinigt. Im vorliegenden Beispielsfall ist ein solcher Abreinigungszyklus etwa dreimal pro Betriebsstunde vorgesehen. Diese Abreinigungseinrichtung 86 besitzt eine an die Druckluftquelle 139 ebenfalls angeschlossene Druckluftleitung 138.1. Über diese Druckluftleitung 138.1, die über ein elektrisch angesteuertes Magnetventil 146 geöffnet oder geschlossen wird, können Luftdruckstöße von innen her gegen die jeweiligen einzelnen Filterplatten 30 gerichtet werden. Durch diese Druckluftstöße werden die außen an den Filterplatten anhaftenden Verunreinigungen abgerüttelt. Diese Abreinigungstechnik ist an sich bekannt.

Alternativ oder zusätzlich kann die Abreinigung auch in Abhängigkeit von dem Verschmutzungsgrad der Filterplatten 30 vorgenommen werden. Über in der Zeichnung nicht dargestellte Drucksensoren könnte der Druck auf der Reinluftseite und auf der Rohluftseite des Filtergehäuses 26 ermittelt werden. Falls der Druckunterschied ein vorgegebenes Maß überschreiten sollte, würde dies eine zu starke Verschmutzung der Filteroberfläche der Filterplatten 30 beinhalten. Es würden dann das Magnetventil 146 geöffnet und die vorhandenen Filterplatten 30 nacheinander, stoßweise abgereinigt werden.

## Patentansprüche

1. Verfahren zum Abscheiden von Staubbestandteilen aus einem explosionsfähigen Staub-Luft-Gemisch,
a) bei dem das Staub-Luft-Gemisch ein Filtergehäuse durchströmt, dessen Filterflächen von Zeit zu Zeit abgereinigt werden,
b) bei dem der bei der Abreinigung der Filterflächen anfallende Prozessstaub in einen austauschbaren, inerte Additiv-Partikel enthaltenden Staubbehälter hineinfällt und dort mit den Additiv-Partikeln vermischt wird,
- **dadurch gekennzeichnet, dass**
c) vor Beginn eines erstmals den Inhalt eines Staubbehälters nutzenden Abscheidevorganges Additiv-Partikel aus dem Staubbehälter heraus an den Filterflächen angelagert werden,
d) anschließend das Gewicht des Staubbehälters festgestellt wird und
e) anschließend der Abscheidevorgang begonnen wird, bei dem sich aus dem Staub-Luft-Gemisch die Staubbestandteile an den mit Additiv-Partikeln belegten Filterflächen absetzen und beim Abreinigen der Filterflächen als Prozessstaub in den Staubbehälter hineinfallen und dadurch das Gewicht des Staubbehälters erhöhen,
f) diese im Verfahrensschritt e) eintretende Gewichtszunahme des Staubbehälters überwacht wird,
g) die weitere Nutzung dieses Staubbehälters beendet wird, wenn die im Verfahrensschritt f) gegenüber d) festgestellte Gewichtszunahme einen bestimmten Wert erreicht hat oder wenn eine bestimmte Standzeit des Staubbehälters erreicht ist.

2. Verfahren nach Anspruch 1,
- **dadurch gekennzeichnet, dass**
- als Staubbestandteile Aluminiumstäube und Aluminiumspäne vorhanden sind.

3. Verfahren nach Anspruch 1 oder 2,
- **dadurch gekennzeichnet, dass**
- die Hauptbestandteile der Additiv-Partikel Calciumcarbonat (CaCo₃) und Siliciumdioxid (SiO₂).

4. Verfahren nach Anspruch 1,
- **dadurch gekennzeichnet, dass**
- das Gewicht des Staubbehälters vor Beginn des Verfahrensschrittes c) festgestellt wird,
- der Verfahrensschritt e) erst begonnen wird, wenn das Gewicht des Staubbehälters sich um einen bestimmten Wert verkleinert hat.

5. Verfahren nach Anspruch 1,
- **dadurch gekennzeichnet, dass**
- im Verfahrensschritt c) Additiv-Partikel eine bestimmte Zeit lang an den Filterflächen angelegt werden, und erst danach der Verfahrensschritt d) begonnen wird.

6. Verfahren nach Anspruch 1,
- **dadurch gekennzeichnet, dass**
- Wägeergebnisse bezüglich des Gewichtes des Staubbehälters auf ihre Plausibilität überprüft werden.

7. Verfahren nach Anspruch 6,
- **dadurch gekennzeichnet, dass**
- der Behälter jeweils gleichzeitig, mittels mehrerer Wägeeinrichtungen gewogen wird, so dass sich das Gewicht des Staubbehälters aus der Summe der Teilgewichte der einzelnen Wägeeinrichtungen ergibt,
- bei sich ergebenden unplanmäßigen Abweichungen des Verhältnisses der Teilgewichte zueinander, um mehr als einen vorgegebenen Toleranzwert, eine Störmeldung erfolgt.

8. Verfahren nach Anspruch 1,
- **dadurch gekennzeichnet, dass**
- vor Beginn des Verfahrensschrittes c) die Filterflächen abgereinigt werden.

9. Verfahren nach Anspruch 1,
- **dadurch gekennzeichnet, dass**
- die Filterflächen in mehreren Abreinigungszyklen, insbesondere etwa dreimal pro Betriebsstunde, abgereinigt werden,
- nach jedem Abreinigungszyklus Additiv-Partikel aus dem Staubbehälter heraus an den Filterflächen angelagert werden, und zwar
-- entweder eine bestimmte Zeit lang,
-- oder solange, bis das Gewicht des Staubbehälters sich um einen bestimmten Wert verkleinert hat.

10. Verfahren nach Anspruch 1,
- **dadurch gekennzeichnet, dass**
- während des Austauschens eines maximal mit Prozessstaub gefüllten Staubbehälters gegen einen noch keinen Prozessstaub enthaltenden, neuen Staubbehälter, das Filtergehäuse in seinem Übergangsbereich zum Staubbehälter verschlossen und der Abreinigungsvorgang für eine vorbestimmte Zeitspanne ohne einen Staubbehälter fortgesetzt wird.

11. Verfahren nach Anspruch 10,
- **dadurch gekennzeichnet, dass**
- beim Überschreiten einer für den Austauschvorgang vorgegebenen Zeitspanne eine Störmeldung erfolgt.

12. Verfahren nach Anspruch 1,
- **dadurch gekennzeichnet, dass**
- Druckluft in den Staubbehälter eingeblasen und dadurch in dem Staubbehälter vorhandene Additiv-Partikel in das Filtergehäuse hinein und gegen die Filterflächen geblasen werden.

13. Verfahren nach Anspruch 12,
- **dadurch gekennzeichnet, dass**
- der Betriebsdruck der Druckluft überwacht wird und beim Über- oder Unterschreiten von Druck-Grenzwerten eine Störmeldung erfolgt.

14. Verfahren nach einem der vorstehenden Ansprüche,
- **dadurch gekennzeichnet, dass**
- eine Einrichtung vorhanden ist zum Überwachen des Ausströmens von Additiv-Partikeln aus dem Staubbehälter heraus.

15. Verfahren nach Anspruch 14,
- **dadurch gekennzeichnet, dass**
- bei nicht oder nicht ausreichendem Ausströmen von Additiv-Partikeln eine Störmeldung erfolgt.

16. Verfahren nach Anspruch 1,
- **dadurch gekennzeichnet, dass**
- zum Ableiten der das Filtergehäuse verlassenden Reinluft ein Ventilator verwendet wird,
- die Lüfterleistung des Ventilators überwacht wird, und beim Unterschreiten eines vorgegebenen Grenzwertes eine Störmeldung abgegeben wird.

17. Verfahren nach Anspruch 16,
- **dadurch gekennzeichnet, dass**
- zum Durchleiten des Staub-Luft-Gemisches durch das Filtergehäuse hindurch ein Ventilator, insbesondere der Ventilator, der zum Ableiten der Reinluft benutzt wird, verwendet wird.

18. Verfahren nach Anspruch 16 oder 17,
- **dadurch gekennzeichnet, dass**
- das Einleiten des Staub-Luft-Gemisches in das Filtergehäuse hinein erst dann erfolgt, wenn der oder die Ventilatoren ihren Arbeitspunkt erreicht haben.

19. Verfahren nach Anspruch 16 oder 17,
- **dadurch gekennzeichnet, dass**
- beim Unterbrechen des Einleitens des Staub-Luft-Gemisches in das Filtergehäuse hinein der oder die Ventilatoren noch eine Zeit lang in Betrieb bleiben.

20. Verfahren nach Anspruch 1,
- **dadurch gekennzeichnet, dass**
- der Druck an der Rohgasseite und an der Reingasseite der Filterflächen festgestellt wird, und beim Überschreiten von vorbestimmten Druck-Grenzwerten eine Störmeldung erfolgt.

21. Verfahren nach Anspruch 11 oder 13 oder 15 oder 16 oder 20,
- **dadurch gekennzeichnet, dass**
- bei einer Störmeldung das Abschalten der die Stäube produzierenden Anlage eingeleitet wird und der Ventilator, der zum Ableiten der das Filtergehäuse verlassenden Reinluft verwendet wird, noch eine Zeit lang betrieben wird.

22. Verfahren nach Anspruch 1,
- **dadurch gekennzeichnet, dass**
- aus dem Staub-Luft-Gemisch zuerst dessen Späne abgeschieden werden und anschließend das restliche Staub-Luft-Gemisch dem Filtergehäuse zugeführt wird.

23. Vorrichtung (10) zum Durchführen des Verfahrens zum Abscheiden von Staubbestandteilen aus einem explosionsfähigen Staub-Luft-Gemisch, nach einem der vorstehenden Ansprüche,
- mit einem Filtergehäuse (26) mit zumindest einem Filterflächen (30) aufweisenden Filterelement, wobei das Staub-Luft-Gemisch als Rohluft (12.3) in das Filtergehäuse (26) hineingeleitet und als Reinluft (24) aus dem Filtergehäuse (26) wieder herausgeleitet wird,
- mit einer Abreinigungseinrichtung (86) für die Filterflächen (30),
- mit einem gasdicht anschließbaren, inerte Additiv-Partikel (60) enthaltenden Staubbehälter (64), in den der durch Abreinigen der Filterflächen (30) anfallende Prozessstaub hineinfällt, und aus dem die Additiv-Partikel (60) mittels Druckluft (138) gegen die Filterflächen (30) blasbar sind,
- **dadurch gekennzeichnet, dass**
- eine Wägeeinrichtung (120) für den Staubbehälter (64) vorhanden ist.

24. Vorrichtung nach Anspruch 23,
- **dadurch gekennzeichnet, dass**
- eine Einrichtung zum Ermitteln des Gesamtgewichtes des Staubbehälters (64) aus den Teilgewichten zumindest zweier Wägevorrichtungen (122, 124) vorhanden ist.

25. Vorrichtung nach Anspruch 23 oder 24,
- **dadurch gekennzeichnet, dass**
- ein Sinterboden (134) in dem Staubbehälter (64) vorhanden ist, der als Zwischenboden ausgebildet ist und der als Tragboden für inerte Additiv-Partikel vorhanden ist,
- die Eintrittsöffnung im Staubbehälter (64) zum Einleiten von Druckluft so vorhanden ist, dass die Druckluft in den zwischen dem Sinterboden und dem Boden des Staubbehälters vorhandenen Zwischenraum (136) hinein- und durch den Sinterboden (134) hindurchleitbar ist,
- ein Trichter (160) oberhalb eines Teilbereiches des Sinterbodens (134) vorhanden ist, wobei der Trichter (160) mit seinem unteren, seine größere Öffnung einrahmenden Rand (162) zum Sinterboden (134) hin ausgerichtet ist,
- ein Ringspalt (166) zwischen diesem unteren Rand (162) des Trichters (160) und dem Sinterboden (134) vorhanden ist, um Partikel der auf dem Tragboden vorhandenen Partikelschicht von außerhalb des Trichters (160) in den Bereich des Trichters (160) hineinströmen zu lassen,
- ein Bodenbereich des Sinterbodens innerhalb des vom Trichter (160) glockenartig eingefassten Teilbereiches vorhanden ist, der besser luftdurchlässig ist als der übrige Sinterbodenbereich.

26. Vorrichtung nach Anspruch 24 oder 25,
- **dadurch gekennzeichnet, dass**
- Einrichtungen vorhanden sind zum Überprüfen der Wägeergebnisse der einzelnen Wägeeinrichtungen.

27. Vorrichtung nach einem der Ansprüche 23 bis 26,
- **dadurch gekennzeichnet, dass**
- in dem Bodenbereich des Sinterbodens (134) ein derartig großer Durchbruch oder Rohrstück (152) vorhanden ist, dass eine gegenüber dem übrigen Sinterbodenbereich vergrößerte Luftdurchlässigkeit vorhanden ist,
- der Durchbruch beziehungsweise das Rohrstück (152) mit der oberen, kleineren Öffnung (158) des Trichters (160) fluchtet.

28. Vorrichtung nach Anspruch 25,
- **dadurch gekennzeichnet, dass**
- der Trichter (160) vollständig innerhalb des Staubbehälters (64) vorhanden ist.

29. Vorrichtung nach einem der Ansprüche 23 bis 28,
- **dadurch gekennzeichnet, dass**
- eine Anpressvorrichtung vorhanden ist zum lösbaren, gasdichten Verkoppeln des Staubbehälters (64) mit dem Filtergehäuse (26).

30. Vorrichtung nach einem der Ansprüche 23 bis 29,
- **dadurch gekennzeichnet, dass**
- ein Zyklon-Abscheider (13, 20) dem Filtergehäuse (26) strömungsmäßig vorgeschaltet ist,
- ein Windsichter (40) strömungsmäßig zwischen Zyklon (20) und Filtergehäuse (26) so vorhanden ist, dass vom Zyklon (20) ausgeschiedene schwerere Staubbestandteile in den Windsichter einleitbar sind, und ein vorbestimmbarer Anteil von diesen schwereren Staubbestandteilen durch den Windsichter (40) hindurch weiter in das Filtergehäuse einleitbar ist.

31. Vorrichtung nach Anspruch 30,
- **dadurch gekennzeichnet, dass**
- der Zyklon-Abscheider (20), der Windsichter (40) und das Filtergehäuse (26) zu einem kompakten Gerät bauteilmäßig zusammengefasst sind.

32. Vorrichtung nach Anspruch 30,
- **dadurch gekennzeichnet, dass**
- der Zyklon-Abscheider (20) zumindest ein inneres und ein äußeres Rohr (16, 18) enthält,
- ein Ansaugrohr (14) für das Feststoff-Gas-Gemisch tangential in das äußere Rohr (16) einmündet,
- das beidseitig offene innere Rohr (18) in das Filtergehäuse (26) einmündet,
- eine zu dem Windsichter (40) führende Verbindungsleitung (36) an einem tangential an dem äußeren Rohr (16) vorhandenen Leitungsstutzen (34) angeschlossen ist,
- der Leitungsstutzen (34) in dem äußeren Rohr (16) zum Separieren von schwereren Staubbestandteilen gegenüber leichteren Staubbestandteilen vorhanden ist.

33. Vorrichtung nach Anspruch 30,
- **dadurch gekennzeichnet, dass**
- eine der Schwerkraft der Staubbestandteile entgegengesetzte Luftströmung durch den Windsichter hindurch herstellbar ist,
- diese entgegengesetzte Luftströmung durch eine Luftdruck-Unterdruckregelung (44) in einer ausgangsseitig des Windsichters (40) angeschlossenen, zu dem Filtergehäuse (26) hinführenden Leitungsverbindung (42) vorhanden ist.

34. Vorrichtung nach Anspruch 30,
- **dadurch gekennzeichnet, dass**
- im Bodenbereich des Windsichters (40) eine Zellenradschleuse (50) zum Ausscheiden von im Bodenbereich abgesetzter Feststoffe (32) vorhanden ist.

## Claims

1. Method for separating dust constituents out of an explosive dust-air mixture,
a) in which the dust-air mixture flows through a filter housing, the filter surfaces of which are cleaned down from time to time,
b) in which the process dust produced during the cleaning of the filter surfaces drops into an exchangeable dust container, which contains inert additive particles, where it is mixed with the additive particles,
- **characterized in that**
c) before the start of a separation operation which uses the contents of a dust container for the first time, additive particles from the dust container are applied to the filter surfaces,
d) then the weight of the dust container is determined, and
e) then the separation operation is commenced, in which the dust constituents from the dust-air mixture settle on the filter surfaces covered with additive particles and when the filter surfaces are cleaned drop into the dust container as process dust, thereby increasing the weight of the dust container,
f) this increase in the weight of the dust container occurring in method step e) is monitored,
g) the further use of this dust container is terminated when the increase in weight recorded in method step f) compared to d) has reached a defined value or when a defined service life of the dust container has been reached.

2. Method according to claim 1,
- **characterized in that**
- aluminum dusts and aluminum chips are present as dust constituents.

3. Method according to claim 1 or 2,
- **characterized in that**
- the main constituents of the additive particles are calcium carbonate (CaCo₃) and silicon dioxide (SiO₂).

4. Method according to claim 1,
- **characterized in that**
- the weight of the dust container is determined prior to commencement of method step c),
- method step e) is only commenced when the weight of the dust container has decreased by a defined amount.

5. Method according to claim 1,
- **characterized in that**
- in method step c) additive particles are applied to the filter surfaces for a defined period of time, and only after this period of time is method step d) commenced.

6. Method according to claim 1,
- **characterized in that**
- a plausibility check is carried out on weighing results relating to the weight of the dust container.

7. Method according to claim 6,
- **characterized in that**
- the container is in each case weighed by means of a plurality of weighing devices simultaneously, so that the weight of the dust container results from the sum of the partial weights of the individual weighing devices,
- in which unplanned deviations in the ratio of the partial weights with respect to one another which result, by more than a predetermined tolerance value, cause a fault message to be emitted.

8. Method according to claim 1,
- **characterized in that**
- the filter surfaces are cleaned down prior to commencement of method step c).

9. Method according to claim 1,
- **characterized in that**
- the filter surfaces are cleaned in a plurality of cleaning cycles, in particular approximately three times per operating hour,
- after each cleaning cycle additive particles from the dust container are applied to the filter surfaces, specifically
- - either for a defined period of time
- - or until the weight of the dust container has decreased by a defined amount.

10. Method according to claim 1,
- **characterized in that**
- while a dust container which has been filled in maximum extent with process dust is being exchanged for a new dust container which does not yet contain any process dust, the filter housing is closed in its transition region to the dust container, and the cleaning operation is continued for a predetermined period of time without a dust container.

11. Method according to claim 10,
- **characterized in that**
- a fault message is issued if a set period of time for the exchange operation is exceeded.

12. Method according to claim 1,
- **characterized in that**
- compressed air is blown into the dust container, and as a result additive particles which are present in the dust container are blown into the filter housing and onto the filter surfaces.

13. Method according to claim 12,
- **characterized in that**
- the operating pressure of the compressed air is monitored and a fault message is issued if pressure limit values are exceeded or undershot.

14. Method according to one of the preceding claims,
- **characterized in that**
- there is a device for monitoring the flow of additive particles out of the dust container.

15. Method according to claim 14,
- **characterized in that**,
- a fault message is issued if additive particles do not flow out or do so only to an insufficient extent.

16. Method according to claim 1,
- **characterized in that**
- a fan is used to discharge the clean air leaving the filter housing,
- the power of the fan is monitored and a fault message is issued if it drops below a predetermined limit value.

17. Method according to claim 16,
- **characterized in that**
- a fan, in particular the fan used to discharge the clean air, is used to pass the dust-air mixture through the filter housing.

18. Method according to claim 16 or 17,
- **characterized in that**
- the dust-air mixture is only introduced into the filter housing when the fan(s) have reached their working point.

19. Method according to claim 16 or 17,
- **characterized in that**
- if the introduction of the dust-air mixture into the filter housing is interrupted, the fan(s) continue to operate for a certain time.

20. Method according to claim 1,
- **characterized in that**
- the pressure on the untreated-gas side and on the clean-gas side of the filter surfaces is determined, and a fault message is issued if predetermined pressure limit values are exceeded.

21. Method according to claim 11 or 13 or 15 or 16 or 20,
- **characterized in that**
- in the event of a fault message the installation producing the dusts is shut down and the fan used to discharge the clean air leaving the filter housing continues to be operated for a certain time.

22. Method according to claim 1,
- **characterized in that**
- first of all the chips are separated out of the dust-air mixture, and then the remaining dust-air mixture is fed to the filter housing.

23. Apparatus (10) for carrying out the method for separating dust constituents out of an explosive dust-air mixture according to one of the preceding claims,
- having a filter housing (26) with at least one filter element having filter surfaces (30), the dust-air mixture being introduced into the filter housing (26) as untreated air (12.3) and being discharged again from the filter housing (26) as clean air (24),
- having a cleaning device (86) for the filter surfaces (30),
- having a dust container (64), which can be connected up in a gastight manner and contains inert additive particles (60), into which the process dust produced as a result of the filter surfaces (30) being cleaned down drops and from which the additive particles (60) can be blown onto the filter surfaces (30) by means of compressed air (138),
- **characterized in that**
- there is a weighing device (120) for the dust container (64).

24. Apparatus according to claim 23,
- **characterized in that**
- there is a device for determining the overall weight of the dust container (64) from the partial weights of at least two weighing apparatuses (122, 124).

25. Apparatus according to claim 23 or 24,
- **characterized in that**
- there is a sintered base (134) in the dust container (64), which serves as an intermediate base and is present as a supporting base for inert additive particles,
- the inlet opening in the dust container (64) for the introduction of compressed air is such that the compressed air can be passed into the space (136) between the sintered base and the base of the dust container and can be passed through the sintered base (134),
- there is a funnel (160) above a subregion of the sintered base (134), the funnel (160) being oriented with its lower edge (162), which surrounds its larger opening, facing toward the sintered base (134),
- there is an annular gap (166) between this lower edge (162) of the funnel (160) and the sintered base (134), in order to allow particles from the layer of particles on the supporting base to flow into the region of the funnel (160) from outside the funnel (160),
- within the subregion enclosed in a bell-shaped manner by the funnel (160), there is a base region of the sintered base which has a greater permeability to air than the remaining region of the sintered base.

26. Apparatus according to claim 24 or 25,
- **characterized in that**
- there are devices for checking the weighing results of the individual weighing devices.

27. Apparatus according to one of claims 23 to 26,
- **characterized in that**
- in the base region of the sintered base (134) there is an aperture or tube piece (152) which is of a sufficient size to provide a greater permeability to air than in the remaining region of the sintered base,
- the aperture or the tube piece (152) is aligned with the upper, smaller opening (158) of the funnel (160).

28. Apparatus according to claim 25,
- **characterized in that**
- the funnel (160) is completely inside the dust container (64).

29. Apparatus according to one of claims 23 to 28,
- **characterized in that**
- there is a pressure-exerting apparatus for releasably coupling the dust container (64) to the filter housing (26) in a gastight manner.

30. Apparatus according to one of claims 23 to 29,
- **characterized in that**
- a cyclone separator (13, 20) is connected upstream of the filter housing (26) in terms of flow,
- there is an air classifier (40) between the cyclone (20) and filter housing (26) in terms of flow, such that relatively heavy dust constituents separated out of the cyclone (20) can be introduced into the air classifier, and a predeterminable proportion of these relatively heavy dust constituents can be introduced through the air classifier (40) into the filter housing.

31. Apparatus according to claim 30,
- **characterized in that**
- the cyclone separator (20), the air classifier (40) and the filter housing (26) are structurally combined to form a compact unit.

32. Apparatus according to claim 30,
- **characterized in that**
- the cyclone separator (20) includes at least an inner and an outer tube (16, 18),
- a suction tube (14) for the solids-gas mixture opens out tangentially into the outer tube (16),
- the inner tube (18), which is open on both sides, opens out into the filter housing (26),
- a connection line (36), which leads to the air classifier (40), is connected to a line connection piece (34) which is present tangentially at the outer tube (16),
- the line connection piece (34) is present in the outer tube (16) for separating off heavier dust constituents from lighter dust constituents.

33. Apparatus according to claim 30,
- **characterized in that**
- it is possible to produce a flow of air through the air classifier in the opposite direction to the force of gravity of the dust constituents,
- this oppositely directed flow of air, by means of an air-pressure vacuum control (44), is present in a line connection (42) which is connected on the exit side of the air classifier (40) and leads to the filter housing (26).

34. Apparatus according to claim 30,
- **characterized in that**
- in the base region of the air classifier (40) there is a star feeder (50) for discharging solids (32) which have settled in the base region.

## Revendications

1. Procédé pour la séparation de composants de poussière d'avec un mélange explosif poussière-air,
a) dans lequel ledit mélange poussière-air parcourt un carter de filtre dont les surfaces filtrantes sont nettoyées de temps à autre,
b) dans lequel la poussière de processus, dégagée lors du nettoyage des surfaces filtrantes, tombe dans un conteneur de poussière remplaçable, renfermant des particules additionnelles inertes, et dans lequel ladite poussière est mélangée auxdites particules additionnelles,
- **caractérisé par le fait que**,
c) préalablement au début d'un processus de séparation utilisant pour la première fois le contenu d'un conteneur de poussière, des particules additionnelles provenant dudit conteneur de poussière sont déposées sur les surfaces filtrantes,
d) le poids du conteneur de poussière est constaté dans l'enchaînement et
e) le processus de séparation est amorcé au stade successif, processus durant lequel les composants de poussière provenant du mélange poussière-air se précipitent sur les surfaces filtrantes chargées de particules additionnelles, puis tombent dans le conteneur de poussière en tant que poussière de processus, lors du nettoyage des surfaces filtrantes, de sorte qu'ils accroissent le poids dudit conteneur de poussière,
f) cet accroissement pondéral du conteneur de poussière, se produisant lors de l'étape opératoire e), fait l'objet d'une surveillance
g) et il est mis un terme à la poursuite de l'utilisation de ce conteneur de poussière lorsque l'accroissement pondéral, constaté à l'étape opératoire f) vis-à-vis de d), a atteint une valeur déterminée, ou bien lorsqu'une durée de service du conteneur de poussière est atteinte.

2. Procédé selon la revendication 1,
- **caractérisé par le fait que**
- des poussières d'aluminium et des copeaux d'aluminium sont présents en tant que composants de poussière.

3. Procédé selon la revendication 1 ou 2,
- **caractérisé par le fait que**
- les composants principaux des particules additionnelles sont le carbonate de calcium (CaCO₃) et le dioxyde de silicium (SiO₂).

4. Procédé selon la revendication 1,
- **caractérisé par le fait que**
- le poids du conteneur de poussière est constaté avant le début de l'étape opératoire c),
- l'étape opératoire e) étant amorcée uniquement lorsque le poids dudit conteneur de poussière a diminué d'une valeur déterminée.

5. Procédé selon la revendication 1,
- **caractérisé par le fait que**
- des particules additionnelles sont plaquées contre les surfaces filtrantes durant un temps déterminé, lors de l'étape opératoire c), l'étape opératoire d) n'étant amorcée qu'au stade successif.

6. Procédé selon la revendication 1,
- **caractérisé par le fait que**
- des résultats de pesage, relatifs au poids du conteneur de poussière, font l'objet d'un contrôle de plausibilité.

7. Procédé selon la revendication 6,
- **caractérisé par le fait que**
- le conteneur est respectivement pesé en simultanéité, au moyen de plusieurs systèmes de pesage, de sorte que le poids dudit conteneur de poussière résulte de la somme des poids fractionnaires des systèmes individuels de pesage,
- une indication d'erreur étant émise lorsque des écarts inattendus, obtenus dans le rapport mutuel desdits poids fractionnaires, excèdent une valeur de tolérance préétablie.

8. Procédé selon la revendication 1,
- **caractérisé par le fait que**
- les surfaces filtrantes sont nettoyées avant le début de l'étape opératoire c).

9. Procédé selon la revendication 1,
- **caractérisé par le fait que**
- les surfaces filtrantes sont nettoyées en plusieurs cycles de nettoyage, notamment environ trois fois par heure de service,
- des particules additionnelles provenant du conteneur de poussière étant déposées sur les surfaces filtrantes, à l'issue de chaque cycle de nettoyage, plus précisément
-- soit pendant un temps déterminé,
-- soit jusqu'à ce que le poids dudit conteneur de poussière ait diminué d'une valeur déterminée.

10. Procédé selon la revendication 1,
- **caractérisé par le fait que**,
- durant le remplacement d'un conteneur de poussière, empli au maximum de poussière de processus, par un nouveau conteneur de poussière ne renfermant encore aucune poussière de processus, le carter de filtre est obturé dans sa zone de transition avec ledit conteneur de poussière et le processus de nettoyage est poursuivi pendant un laps de temps prédéterminé, sans aucun conteneur de poussière.

11. Procédé selon la revendication 10,
- **caractérisé par le fait**
- **qu'**une indication d'erreur est émise lors du dépassement d'un laps de temps préétabli pour l'opération de remplacement.

12. Procédé selon la revendication 1,
- **caractérisé par le fait que**
- de l'air comprimé est insufflé dans le conteneur de poussière, de sorte que des particules additionnelles, présentes dans ledit conteneur de poussière, sont projetées dans le carter de filtre et contre les surfaces filtrantes.

13. Procédé selon la revendication 12,
- **caractérisé par le fait que**
- la pression de service de l'air comprimé est surveillée, et une indication d'erreur est émise lors du dépassement positif ou négatif de valeurs limites de la pression.

14. Procédé selon l'une des revendications précédentes,
- **caractérisé par** la présence
- d'un système conçu pour surveiller la sortie de particules additionnelles hors du conteneur de poussière.

15. Procédé selon la revendication 14,
- **caractérisé par le fait**
- **qu'**une indication d'erreur est émise en cas de sortie inexistante ou insuffisante de particules additionnelles.

16. Procédé selon la revendication 1,
- **caractérisé par le fait**
- **qu'**un ventilateur est utilisé pour évacuer l'air épuré quittant le carter de filtre,
- la puissance de ventilation dudit ventilateur étant surveillée, et une indication d'erreur étant émise lors du dépassement négatif d'une valeur limite préétablie.

17. Procédé selon la revendication 16,
- **caractérisé par le fait**
- **qu'**un ventilateur, en particulier le ventilateur utilisé pour évacuer l'air épuré, est employé pour le brassage du mélange poussière-air à travers le carter de filtre.

18. Procédé selon la revendication 16 ou 17,
- **caractérisé par le fait que**
- l'introduction du mélange poussière-air, dans le carter de filtre, a lieu uniquement lorsque le ou les ventilateur(s) a (ont) atteint son (leur) point opérant.

19. Procédé selon la revendication 16 ou 17,
- **caractérisé par le fait que**,
- lors de l'interruption de l'introduction du mélange poussière-air dans le carter de filtre, le ou les ventilateur(s) demeure(nt) encore en fonction pendant un certain temps.

20. Procédé selon la revendication 1,
- **caractérisé par le fait que**
- la pression, régnant du côté gaz bruts et du côté gaz épurés des surfaces filtrantes, fait l'objet d'une constatation, et une indication d'erreur est émise lors du dépassement de valeurs limites prédéterminées de la pression.

21. Procédé selon la revendication 11 ou 13 ou 15 ou 16 ou 20,
- **caractérisé par le fait que**,
- lors d'une indication d'erreur, la mise hors fonction de l'installation dégageant les poussières est amorcée et le ventilateur, utilisé pour évacuer l'air épuré quittant le carter de filtre, demeure encore en service pendant un certain temps.

22. Procédé selon la revendication 1,
- **caractérisé par le fait que**
- les copeaux du mélange poussière-air sont tout d'abord séparés d'avec ce dernier, après quoi le mélange poussière-air restant est dirigé vers le carter de filtre.

23. Dispositif (10) pour la mise en oeuvre du procédé selon l'une des revendications précédentes, destiné à séparer des composants de poussière d'avec un mélange explosif poussière-air, dispositif comprenant
- un carter de filtre (26) muni d'au moins un élément filtrant présentant des surfaces filtrantes (30) ledit mélange poussière-air étant introduit dans ledit carter de filtre (26) sous la forme d'air brut (12.3), et étant de nouveau extrait dudit carter de filtre (26) sous la forme d'air épuré (24),
- un système de nettoyage (86) affecté aux surfaces filtrantes (30),
- un conteneur de poussière (64) qui peut être raccordé avec étanchéité aux gaz, renferme des particules additionnelles inertes (60), dans lequel tombe la poussière de processus dégagée suite à un nettoyage des surfaces filtrantes (30), et hors duquel les particules additionnelles (60) peuvent être projetées contre lesdites surfaces filtrantes (30), par de l'air comprimé (138),
- **caractérisé par** la présence
- d'un système de pesage (120) dédié au conteneur de poussière (64).

24. Dispositif selon la revendication 23,
- **caractérisé par** la présence
- d'un système conçu pour déterminer le poids total du conteneur de poussière (64) sur la base des poids fractionnaires d'au moins deux dispositifs de pesage (122, 124).

25. Dispositif selon la revendication 23 ou 24,
- **caractérisé par** la présence,
- dans le conteneur de poussière (64), d'un fond fritté (134) qui est réalisé sous la forme d'un fond intercalaire, et se présente comme un fond supportant des particules additionnelles inertes,
- l'orifice d'entrée, pratiqué dans ledit conteneur de poussière (64) en vue de l'introduction d'air comprimé, étant conçu de façon telle que l'air comprimé puisse être introduit dans l'espace intermédiaire (136) réservé entre le fond fritté et le fond dudit conteneur de poussière, et puisse être convoyé à travers ledit fond fritté (134),
- un entonnoir (160) étant présent au-dessus d'une région partielle du fond fritté (134), ledit entonnoir (160) pointant vers ledit fond fritté (134) par son bord inférieur (162) encadrant sa plus grande ouverture,
- un interstice annulaire (166) étant présent, entre le fond fritté (134) et ce bord inférieur (162) de l'entonnoir (160), de manière que des particules de la couche de particules, située sur le fond de support, puissent affluer dans la région de l'entonnoir (160) depuis l'extérieur dudit entonnoir (160),
- une région du fond fritté, présente à l'intérieur de la zone partielle circonscrite par l'entonnoir (160) à la manière d'une cloche, offrant une meilleure perméabilité à l'air que la région restante dudit fond fritté.

26. Dispositif selon la revendication 24 ou 25,
- **caractérisé par** la présence
- de systèmes conçus pour contrôler les résultats de pesage des systèmes individuels de pesage.

27. Dispositif selon l'une des revendications 23 à 26,
- **caractérisé par** la présence,
- dans la région du fond fritté (134), d'une perforation ou d'une pièce tubulaire (152) d'un dimensionnement propre à conférer une perméabilité à l'air accrue vis-à-vis de la région restante dudit fond fritté,
- ladite perforation ou ladite pièce tubulaire (152) étant respectivement située dans l'alignement de l'ouverture supérieure (158) de l'entonnoir (160), pourvue d'un plus petit dimensionnement.

28. Dispositif selon la revendication 25,
- **caractérisé par le fait que**
- l'entonnoir (160) est intégralement logé à l'intérieur du conteneur de poussière (64).

29. Dispositif selon l'une des revendications 23 à 28,
- **caractérisé par** la présence
- d'un dispositif de mise en applique par pression, destiné à accoupler le conteneur de poussière (64) avec le carter de filtre (26), de manière libérable et étanche aux gaz.

30. Dispositif selon l'une des revendications 23 à 29,
- **caractérisé par le fait**
- **qu'**un séparateur à cyclone (13, 20) est implanté en amont du carter de filtre (26) dans le sens de l'écoulement,
- un dépoussiéreur pneumatique (40) étant interposé entre le cyclone (20) et le carter de filtre (26), dans le sens de l'écoulement, de telle sorte que des composants de poussière plus lourds, séparés par ledit cyclone (20), puissent être introduits dans ledit dépoussiéreur pneumatique, et qu'une part de ces composants de poussière plus lourds, pouvant être prédéterminée, puisse ensuite être introduite dans ledit carter de filtre en parcourant ledit dépoussiéreur pneumatique (40).

31. Dispositif selon la revendication 30,
- **caractérisé par le fait que**
- le séparateur à cyclone (20), le dépoussiéreur pneumatique (40) et le carter de filtre (26) sont structurellement regroupés en un appareil compact.

32. Dispositif selon la revendication 30,
- **caractérisé par le fait que**
- le séparateur à cyclone (20) renferme au moins des tubes intérieur et extérieur (18, 16),
- un tube d'aspiration (14), destiné au mélange gaz-substances solides, débouchant tangentiellement dans le tube extérieur (16),
- le tube intérieur (18), ouvert des deux côtés, débouchant dans le carter de filtre (26),
- un conduit de liaison (36), menant au dépoussiéreur pneumatique (40), étant raccordé à un embout de canalisation (34) occupant une position tangentielle sur le tube extérieur (16),
- ledit embout de canalisation (34) étant situé dans ledit tube extérieur (16), en vue de séparer des composants de poussière plus lourds d'avec des composants de poussière plus légers.

33. Dispositif selon la revendication 30,
- **caractérisé par**
- la faculté d'instaurer, à travers le dépoussiéreur pneumatique, une circulation d'air contrecarrant la gravité des composants de poussière,
- cette circulation d'air antagoniste étant instaurée, par l'intermédiaire d'une régulation (44) agissant sur la dépression et sur la pression d'air, dans une jonction de canalisation (42) raccordée au côté sortie dudit dépoussiéreur pneumatique (40), et gagnant le carter de filtre (26).

34. Dispositif selon la revendication 30,
- **caractérisé par** la présence,
- dans la région du fond du dépoussiéreur pneumatique (40), d'un sas (50) à roue cellulaire affecté à la séparation de substances solides (32) déposées dans ladite région de fond.
